# EUROPÄISCHE PATENTSCHRIFT

(11) **EP 2 754 934 B1**
(45) Veröffentlichungstag und Bekanntmachung des Hinweises auf die Patenterteilung: **07.11.2018**
(21) Anmeldenummer: 14150598.2
(22) Anmeldetag: 09.01.2014
(51) Int. Cl.: F16K 31/52, B60G 17/052, F16K 31/60

(54) **Ventil und Verfahren zum Zusammenfügen eines Ventils**
Valve and method for assembling a valve
Soupape et procédé d'assemblage d'une soupape

(30) Priorität: 11.01.2013 DE 102013100245
(43) Veröffentlichungstag der Anmeldung: 16.07.2014
(73) Patentinhaber: KNORR-BREMSE Systeme für Nutzfahrzeuge GmbH, 80809 München (DE)
(72) Erfinder: Majlath, Attila, 6000 Kecskemét (HU); Farkas, Gabor, 6000 Kecskemét (HU); Koncz, Laszlo, 6000 Kecskemét (HU); Papp, Lajos, 6100 Kiskunfélegyháza (HU)

(56) Entgegenhaltungen:
- DE-A1-102006 006 439
- DE-B- 1 144 125
- GB-A- 862 896
- JP-A- 2001 227 012
- KR-A- 20110 138 477
- US-A- 1 006 565
- US-A- 4 206 934
- US-A- 5 031 876
- US-A- 5 695 120
- US-A- 5 787 932
- US-A- 5 934 320
- US-A1- 2001 008 333
- US-A1- 2004 177 887
- US-A1- 2012 175 375
- US-A1- 2012 319 366

## Beschreibung

Die vorliegende Erfindung bezieht sich auf ein Luftfederungsventil für ein Fahrzeug, auf ein Verfahren zum Zusammenfügen eines Luftfederungsventils und auf eine Verwendung eines einstückig ausgeformten Betätigungshebels.

Häufig ist ein Ventil mittels eines Betätigungsarms bzw. Betätigungshebels betätigbar. Ein Betätigungsarm kann an einem Mitnehmer des Ventils angebracht sein. Der Mitnehmer dient hierbei einer Bewegungsübertragung zwischen dem Betätigungsarm und dem Ventil. Üblicherweise ist hierbei der Betätigungsarm an dem Mitnehmer des Ventils anbringbar oder angebracht.

Die DE 1 144 125 offenbart einen drehschiebergesteuerter Höhenregler zur Regelung von mit einem Fluid arbeitenden Federungen, insbesondere für Kraftfahrzeuge.

Die DE 10 2006 006 439 A1 offenbart eine Ventileinrichtung zur manuellen Veränderung der Niveaulage eines luftgefederten Fahrzeuges.

Die US 2001/0008333 A1 offenbart eine Fahrzeugsperre und ein rotierbares Höhenkontrollventil für dasselbe.

Die US 1,006,565 A offenbart einen Kompressions- und Ablasshahn.

Die US 4,206,934 A offenbart einen Kontrollventilmechanismus für eine Luftfederfahrzeugsperre.

Die US 5,787,932 A offenbart eine Bypass-Röhre zur Zeitverzögerung eines Höhenkontrollventils.

Die JP 2001227012 A offenbart einen einzelnen hebelartigen Kombinationshahn.

Die US 5,031,876 A offenbart einen Hahn mit einem ballförmigen Stopper.

Die US 2012/319366 A1 offenbart ein Luftfederungsventil gemäß dem Oberbegriff des Anspruchs 1.

In der US 2004/177887 A1 ist ein Airbag-Ventil mit einstellbarer Totzone beschrieben. Die US 5 934 320 A zeigt ein Drehventil für Fluid.
In der GB 862 896 A ist ein Luftfederventil bzw. Niveauregelventil offenbart.
Die US 2012/0175375 A1 beschreibt ein Ventil für unter Druck stehendes Fluid und einen mit einem solchen Ventil ausgestatteten Tank.
In der US 5,695,120 A ist eine Spritzpistole mit einem Ventil und einem Handgriff gezeigt.
Es ist die Aufgabe der vorliegenden Erfindung, ein verbessertes Luftfederungsventil für ein Fahrzeug, ein verbessertes Verfahren zum Zusammenfügen eines Luftfederungsventils und eine verbesserte Verwendung eines einstückig ausgeformten Betätigungshebels zu schaffen.
Diese Aufgabe wird durch ein Luftfederungsventil für ein Fahrzeug, ein Verfahren zum Zusammenfügen eines Luftfederungsventils sowie eine Verwendung eines einstückig ausgeformten Betätigungshebels gemäß den unabhängigen und nebengeordneten Patentansprüchen gelöst.
Ein besonders vorteilhaftes Luftfederungsventil für ein Fahrzeug weist einen Ventilkörper mit Fluidkanälen und einem Absperrelement auf, wobei das Luftfederungsventil ferner einen einstückig ausgeformten Betätigungshebel mit einem Betätigungsabschnitt und einem Mitnehmerabschnitt aufweist, wobei der Mitnehmerabschnitt zum Übertragen einer auf den Betätigungsabschnitt ausübbaren Betätigungskraft auf das Absperrelement mechanisch mit dem Ventilkörper koppelbar oder gekoppelt ist, wobei der Betätigungsabschnitt ein zweifach gekrümmtes Längsschnittprofil in Gestalt eines angedeuteten S-förmigen Längsschnittprofils aufweist, wobei der Betätigungsabschnitt des Betätigungshebels ein rechteckiges Querschnittsprofil aufweist, wobei der Betätigungsabschnitt ein erstes Ende und ein zweites Ende aufweist, wobei an dem zweiten Ende des Betätigungsabschnitts ein Befestigungsabschnitt zum Befestigen des Betätigungsabschnitts an einer betätigenden Einrichtung angeordnet ist, wobei der Betätigungshebel aus einem Kunststoffmaterial ausgeformt ist, wobei der Betätigungshebel einen in dem Betätigungsabschnitt ausgeformten Verstärkungsabschnitt zum Verstärken einer mechanischen Steifigkeit des Betätigungshebels aufweist, wobei der Mitnehmerabschnitt ein rundes Querschnittsprofil aufweist und als ein zylindrischer Teilabschnitt des Betätigungshebels ausgeformt ist, wobei an dem ersten Ende des Betätigungsabschnitts ein Übergangsbereich zwischen dem Betätigungsabschnitt und dem Mitnehmerabschnitt angeordnet ist..

Das Ventil kann insbesondere in Verbindung mit einer Luftfederung eines Fahrzeugs verwendet bzw. eingesetzt werden. Bei dem Fahrzeug kann es sich um ein Kraftfahrzeug handeln, insbesondere ein straßengebundenes Kraftfahrzeug, wie einen Personenkraftwagen, einen Lastkraftwagen oder ein sonstiges Nutzfahrzeug. Der Betätigungshebel ist mit dem Ventilkörper mittels einer formschlüssigen, kraftschlüssigen und/oder stoffschlüssigen Verbindung koppelbar. Der Betätigungshebel ist mit dem Ventilkörper unter Verwendung zumindest eines Befestigungsmittels koppelbar. Der Mitnehmerabschnitt ist ein erster Teilabschnitt des Betätigungshebels und der Betätigungsabschnitt ist ein zweiter Teilabschnitt des Betätigungshebels. Der Mitnehmerabschnitt des Betätigungshebels ist ausgebildet, um als ein Mitnehmer zu fungieren. Der Betätigungsabschnitt des Betätigungshebels ist ausgebildet, um eine Betätigungskraft aufzunehmen und über den Mitnehmerabschnitt auf den Ventilkörper, insbesondere auf das Absperrelement, übertragbar zu machen.

Ein besonders vorteilhaftes Verfahren zum Zusammenfügen eines Luftfederungsventils für ein Fahrzeug weist folgende Schritte auf:
Bereitstellen eines Ventilkörpers mit Fluidkanälen und einem Absperrelement und Bereitstellen eines einstückig ausgeformten Betätigungshebels mit einem Betätigungsabschnitt und einem Mitnehmerabschnitt, wobei der Betätigungsabschnitt ein zweifach gekrümmtes Längsschnittprofil in Gestalt eines angedeuteten S-förmigen Längsschnittprofils aufweist, wobei der Betätigungshebel aus einem Kunststoffmaterial ausgeformt ist, wobei der Betätigungshebel einen in dem Betätigungsabschnitt ausgeformten Verstärkungsabschnitt zum Verstärken einer mechanischen Steifigkeit des Betätigungshebels aufweist, wobei der Mitnehmerabschnitt ein rundes Querschnittsprofil aufweist und als ein zylindrischer Teilabschnitt des Betätigungshebels ausgeformt ist, wobei der Betätigungsabschnitt des Betätigungshebels ein rechteckiges Querschnittsprofil aufweist, wobei der Betätigungsabschnitt ein erstes Ende und ein zweites Ende aufweist, wobei an dem ersten Ende des Betätigungsabschnitts ein Übergangsbereich zwischen dem Betätigungsabschnitt und dem Mitnehmerabschnitt angeordnet ist, wobei an dem zweiten Ende des Betätigungsabschnitts ein Befestigungsabschnitt zum Befestigen des Betätigungsabschnitts an einer betätigenden Einrichtung angeordnet ist; und
Koppeln des Mitnehmerabschnitts zum Übertragen einer auf den Betätigungsabschnitt ausübbaren Betätigungskraft auf das Absperrelement mechanisch mit dem Ventilkörper.

Durch Ausführen des Verfahrens kann eine Version des vorstehend genannten Luftfederungsventils vorteilhaft zusammengefügt werden.

Besonders vorteilhaft ist auch eine Verwendung eines einstückig ausgeformten Betätigungshebels mit einem Betätigungsabschnitt, der ein zweifach gekrümmtes Längsschnittprofil in Gestalt eines angedeuteten S-förmigen Längsschnittprofils aufweist, und einem Mitnehmerabschnitt zum Übertragen einer auf den Betätigungsabschnitt ausübbaren Betätigungskraft auf ein Absperrelement eines Ventilkörpers eines Luftfederungsventils für ein Fahrzeug, wobei der Betätigungshebel aus einem Kunststoffmaterial ausgeformt ist, wobei der Betätigungshebel einen in dem Betätigungsabschnitt ausgeformten Verstärkungsabschnitt zum Verstärken einer mechanischen Steifigkeit des Betätigungshebels aufweist, wobei der Mitnehmerabschnitt ein rundes Querschnittsprofil aufweist und als ein zylindrischer Teilabschnitt des Betätigungshebels ausgeformt ist, wobei der Betätigungsabschnitt des Betätigungshebels ein rechteckiges Querschnittsprofil aufweist, wobei der Betätigungsabschnitt ein erstes Ende und ein zweites Ende aufweist, wobei an dem ersten Ende des Betätigungsabschnitts ein Übergangsbereich zwischen dem Betätigungsabschnitt und dem Mitnehmerabschnitt angeordnet ist, wobei an dem zweiten Ende des Betätigungsabschnitts ein Befestigungsabschnitt zum Befestigen des Betätigungsabschnitts an einer betätigenden Einrichtung angeordnet ist.

Gemäß Ausführungsformen der vorliegenden Erfindung können ein Mitnehmer und ein Betätigungsarm als ein einstückiges Bauteil, der Betätigungshebel, integriert sein. Hierbei kann der Betätigungshebel direkt an einem Ventilkörper eines Ventils angebracht sein oder werden. Der Betätigungshebel erfüllt dabei insbesondere sowohl die Funktion eines Betätigungsarms als auch die Funktion eines Mitnehmers.

Vorteilhafterweise kann gemäß Ausführungsformen der vorliegenden Erfindung somit eine zeitraubende und umständliche Montage eines Betätigungsarms an einem Mitnehmer vermieden werden. Hierbei kann auch eine mechanische Schwachstelle in Gestalt der mechanischen Verbindung zwischen Betätigungsarm und Mitnehmer eliminiert werden. Ein einstückig ausgeformter Betätigungshebel stellt eine unkomplizierte, wirtschaftliche und platzsparende Lösung für eine Betätigung eines Ventils dar. Vorteilhafterweise ist ein solcher Betätigungshebel preisgünstig und einfach herzustellen und in Gebrauch leichtgewichtig, robust und korrosionsbeständig. Ferner ist der Betätigungsabschnitt des Betätigungshebels an jeweilige Anwendungsbedingungen bzw. Einbauumgebungen produktionsseitig anpassbar. Zudem können mittels eines solchen Verstärkungsabschnitts mechanische Eigenschaften des Betätigungshebels verbessert werden. Somit kann auch bei Verwendung eines Kunststoffmaterials als Werkstoff für den Betätigungshebel eine gute mechanische Steifigkeit erhalten werden.

Bevorzugte Ausführungsbeispiele der vorliegenden Erfindung werden nachfolgend Bezug nehmend auf die beiliegenden Zeichnungen näher erläutert. Es zeigen:
- Fig. 1: eine Darstellung einer Mitnehmer-Betätigungsarm-Anordnung in einem zerlegten Zustand;
- Fig. 2: eine Darstellung der Mitnehmer-Betätigungsarm-Anordnung aus Fig. 1 in einem zusammengebauten Zustand;
- Fig. 3: eine Darstellung eines Betätigungshebels gemäß einem Ausführungsbeispiel der vorliegenden Erfindung;
- Fig. 4: eine Darstellung eines Ventils gemäß einem Ausführungsbeispiel der vorliegenden Erfindung; und
- Fig. 5: ein Ablaufdiagramm eines Verfahrens gemäß einem Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

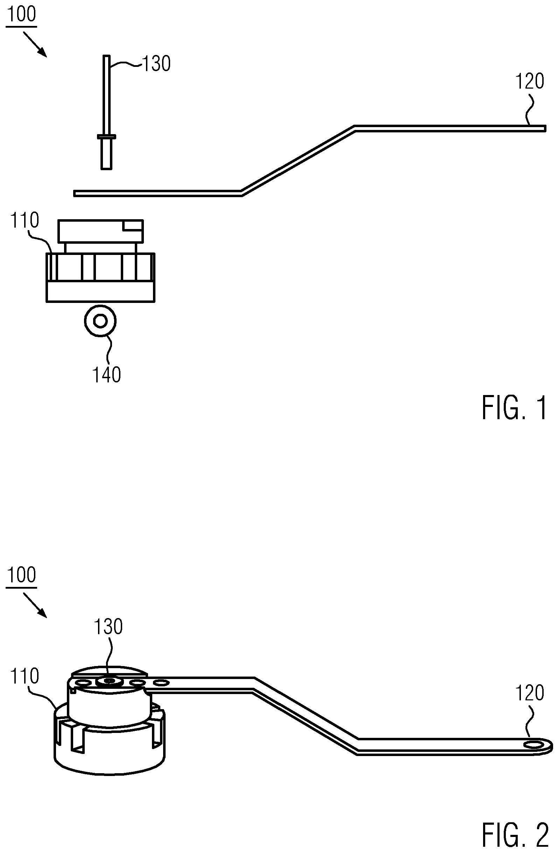

Fig. 1 zeigt eine Darstellung einer Mitnehmer-Betätigungsarm-Anordnung 100 in einem zerlegten Zustand. Die Mitnehmer-Betätigungsarm-Anordnung 100 weist einen Mitnehmer 110, einen Betätigungsarm 120, ein Blindniet 130 und eine Scheibe 140 bzw. Unterlegscheibe oder Beilagscheibe auf. Mittels des Blindniets 130 und der Scheibe 140 sind der Mitnehmer 110 und der Betätigungsarm 120 aneinander befestigbar.

Fig. 2 zeigt eine Darstellung der Mitnehmer-Betätigungsarm-Anordnung 100 aus Fig. 1 in einem zusammengebauten Zustand. Gezeigt sind der Mitnehmer 110, der Befestigungsarm 120 und ein darstellungsbedingter Teilabschnitt des Blindniets 130. Hierbei sind der Mitnehmer 110 und der Befestigungsarm 120 in einem aneinander befestigten bzw. zusammengebauten Zustand dargestellt.

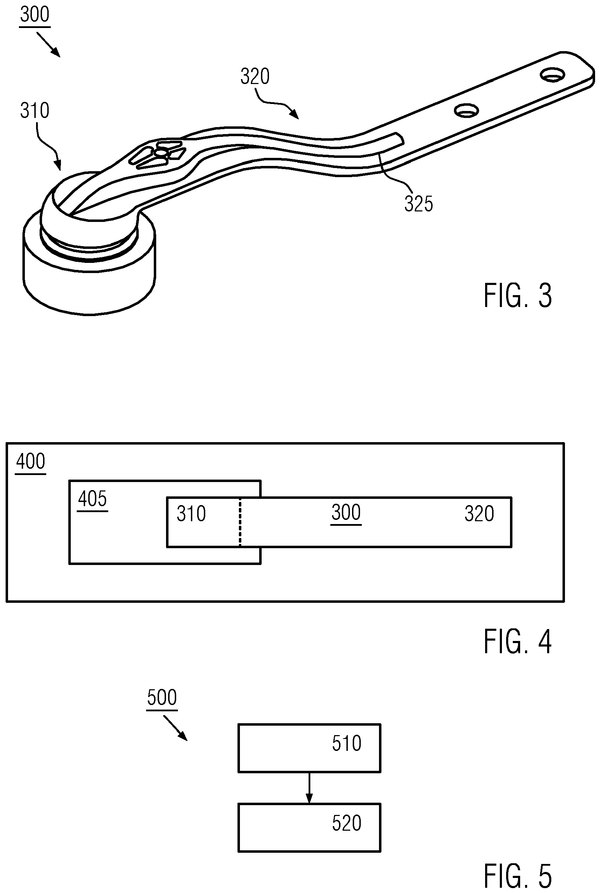

Fig. 3 zeigt eine Darstellung eines Betätigungshebels 300 gemäß einem Ausführungsbeispiel der vorliegenden Erfindung. Der Betätigungshebel 300 weist einen Mitnehmerabschnitt 310 und einen Betätigungsabschnitt 320 auf. Der Betätigungsabschnitt 320 weist einen Verstärkungsabschnitt 325 auf. Der Betätigungshebel 300 ist ein einstückig ausgeformtes Bauteil.

Der Mitnehmerabschnitt 310 ist ausgebildet, um mit einem Ventilkörper eines Ventils, wie des in Fig. 4 dargestellten Ventils, mechanisch gekoppelt zu werden. Insbesondere ist der Mitnehmerabschnitt 310 ausgebildet, um mittels einer geeigneten Verbindungstechnik mechanisch wirksam mit einem Absperrelement eines Ventils verbunden zu werden. Hierbei ist der Mitnehmerabschnitt 310 ausgebildet, um eine auf den Betätigungsabschnitt 320 ausgeübte Betätigungskraft auf ein Ventil bzw. ein Absperrelement eines Ventils zu übertragen. Gemäß dem in Fig. 3 dargestellten Ausführungsbeispiel der vorliegenden Erfindung weist der Mitnehmerabschnitt 310 ein rundes Querschnittsprofil auf. Der Mitnehmerabschnitt 310 ist hierbei als ein beispielhaft zylindrischer Teilabschnitt des Betätigungshebels 300 ausgeformt.

Der Betätigungsabschnitt 320 ist ausgebildet, um eine Betätigungskraft aufzunehmen und mittels des Mitnehmerabschnitts 310 auf einen Ventilkörper eines Ventils übertragbar zu machen. Der Betätigungsabschnitt 320 weist gemäß dem in Fig. 3 dargestellten Ausführungsbeispiel der vorliegenden Erfindung ein im Wesentlichen rechteckiges Querschnittsprofil auf. Beispielhaft weist der Betätigungsabschnitt 320 gemäß dem in Fig. 3 dargestellten Ausführungsbeispiel der vorliegenden Erfindung ein zweifach gekrümmtes Längsschnittprofil auf. Hierbei handelt es sich bei dem Längsschnittprofil des Betätigungsabschnitts 320 um ein angedeutet S-förmiges Längsschnittprofil.

Der Betätigungsabschnitt 320 ist hierbei als ein länglicher Teilabschnitt des Betätigungshebels 300 ausgeformt. Der Betätigungsabschnitt 320 weist ein erstes Ende und ein zweites Ende auf. An dem ersten Ende des Betätigungsabschnitts 320 ist ein Übergangsbereich zwischen dem Betätigungsabschnitt 320 und dem Mitnehmerabschnitt 310 angeordnet. An dem zweiten Ende des Betätigungsabschnitts 320 ist ein Befestigungsabschnitt, beispielhaft in Gestalt zweier Durchgangslöcher, zum Befestigen des Betätigungsabschnitts 320 an einer bestätigenden Einrichtung angeordnet.

Der Verstärkungsabschnitt 325 ist als eine Sicke in dem Betätigungsabschnitt 320 des Betätigungshebels 300 ausgeformt. Hierbei erstreckt sich eine Längserstreckungsachse des Verstärkungsabschnitts 325 entlang einer Längserstreckungsachse des Betätigungsabschnitts 320. Insbesondere erstreckt sich der Verstärkungsabschnitt 325 entlang eines Teilbetrags einer Längserstreckungsabmessung des Betätigungsabschnitts 320 zwischen dem Übergangsbereich oder dem ersten Ende des Betätigungsabschnitts 320 und dem zweiten Ende bzw. dem Befestigungsabschnitt des Betätigungsabschnitts 320.

Fig. 4 zeigt eine Darstellung eines Ventils gemäß einem Ausführungsbeispiel der vorliegenden Erfindung. Gezeigt sind ein Betätigungshebel 300, der einen Mitnehmerabschnitt 310 und einen Betätigungsabschnitt 320 aufweist, ein Ventil 400 und ein Ventilkörper 405. Bei den Betätigungshebel 300 handelt es sich um den in Fig. 3 gezeigten und beschriebenen Betätigungshebel. Das Ventil 400 weist den Ventilkörper 405 und den Betätigungshebel 300 auf. Der Betätigungshebel 300 ist an dem Ventilkörper 405 angebracht bzw. mit dem Ventilkörper 405 mechanisch gekoppelt. Hierbei ist insbesondere der Mitnehmerabschnitt 310 mechanisch mit dem Ventilkörper 405 gekoppelt. Somit kann er in Fig. 3 gezeigte und beschriebene Betätigungshebel 300 in Verbindung mit dem Ventil 400 vorteilhaft verwendet werden.

Fig. 5 zeigt ein Ablaufdiagramm eines Verfahrens 500 gemäß einem Ausführungsbeispiel der vorliegenden Erfindung. Das Verfahren 500 dient zum Zusammenfügen eines Ventils, insbesondere eines Luftfederungsventils für ein Fahrzeug. Bei dem Ventil, das mittels des Verfahrens 500 zusammenfügbar ist, handelt es sich beispielsweise um das Ventil 400 aus Fig. 4. Das Verfahren 500 umfasst einen Schritt 510 des Bereitstellens eines Ventilkörpers mit Fluidkanälen und einem Absperrelement und des Bereitstellens eines einstückig ausgeformten Betätigungshebels mit einem Betätigungsabschnitt und einem Mitnehmerabschnitt. Auch umfasst das Verfahren 500 einen Schritt 520 des Koppelns des Mitnehmerabschnitts zum Übertragen einer auf den Betätigungsabschnitt ausübbaren Betätigungskraft auf das Absperrelement mechanisch mit dem Ventilkörper.

Die beschriebenen Ausführungsbeispiele sind nur beispielhaft gewählt und können miteinander kombiniert werden.

### Bezugszeichenliste

- 100: Mitnehmer-Betätigungsarm-Anordnung
- 110: Mitnehmer
- 120: Betätigungsarm
- 130: Blindniet
- 140: Scheibe
- 300: Betätigungshebel
- 310: Mitnehmerabschnitt
- 320: Betätigungsabschnitt
- 325: Verstärkungsabschnitt
- 400: Luftfederungsventil
- 405: Ventilkörper
- 500: Verfahren zum Zusammenfügen eines Ventils
- 510: Schritt des Bereitstellens
- 520: Schritt des Koppelns

## Patentansprüche

1. Luftfederungsventil (400) für ein Fahrzeug, wobei das Luftfederungsventil (400) einen Ventilkörper (405) mit Fluidkanälen und einem Absperrelement aufweist, wobei das Luftfederungsventil (400) ferner einen einstückig ausgeformten Betätigungshebel (300) mit einem Betätigungsabschnitt (320) und einem Mitnehmerabschnitt (310) aufweist, wobei der Mitnehmerabschnitt (310) zum Übertragen einer auf den Betätigungsabschnitt (320) ausübbaren Betätigungskraft auf das Absperrelement mechanisch mit dem Ventilkörper (405) koppelbar oder gekoppelt ist, wobei der Betätigungsabschnitt (320) ein zweifach gekrümmtes Längsschnittprofil in Gestalt eines angedeuteten S-förmigen Längsschnittprofils aufweist, wobei der Betätigungsabschnitt (320) des Betätigungshebels (300) ein rechteckiges Querschnittsprofil aufweist, wobei der Betätigungsabschnitt (320) ein erstes Ende und ein zweites Ende aufweist, wobei an dem zweiten Ende des Betätigungsabschnitts (320) ein Befestigungsabschnitt zum Befestigen des Betätigungsabschnitts (320) an einer betätigenden Einrichtung angeordnet ist, **dadurch gekennzeichnet, dass** der Betätigungshebel (300) aus einem Kunststoffmaterial ausgeformt ist, wobei der Betätigungshebel (300) einen in dem Betätigungsabschnitt (320) ausgeformten Verstärkungsabschnitt (325) zum Verstärken einer mechanischen Steifigkeit des Betätigungshebels (300) aufweist, wobei der Mitnehmerabschnitt (310) ein rundes Querschnittsprofil aufweist und als ein zylindrischer Teilabschnitt des Betätigungshebels (300) ausgeformt ist, wobei an dem ersten Ende des Betätigungsabschnitts (320) ein Übergangsbereich zwischen dem Betätigungsabschnitt (320) und dem Mitnehmerabschnitt (310) angeordnet ist.

2. Verfahren (500) zum Zusammenfügen eines Luftfederungsventils (400) für ein Fahrzeug, wobei das Verfahren (500) folgende Schritte aufweist:
Bereitstellen (510) eines Ventilkörpers (405) mit Fluidkanälen und einem Absperrelement und Bereitstellen (510) eines einstückig ausgeformten Betätigungshebels (300) mit einem Betätigungsabschnitt (320) und einem Mitnehmerabschnitt (310), wobei der Betätigungsabschnitt (320) ein zweifach gekrümmtes Längsschnittprofil in Gestalt eines angedeuteten S-förmigen Längsschnittprofils aufweist, wobei der Betätigungshebel (300) aus einem Kunststoffmaterial ausgeformt ist, wobei der Betätigungshebel (300) einen in dem Betätigungsabschnitt (320) ausgeformten Verstärkungsabschnitt (325) zum Verstärken einer mechanischen Steifigkeit des Betätigungshebels (300) aufweist, wobei der Mitnehmerabschnitt (310) ein rundes Querschnittsprofil aufweist und als ein zylindrischer Teilabschnitt des Betätigungshebels (300) ausgeformt ist, wobei der Betätigungsabschnitt (320) des Betätigungshebels (300) ein rechteckiges Querschnittsprofil aufweist, wobei der Betätigungsabschnitt (320) ein erstes Ende und ein zweites Ende aufweist, wobei an dem ersten Ende des Betätigungsabschnitts (320) ein Übergangsbereich zwischen dem Betätigungsabschnitt (320) und dem Mitnehmerabschnitt (310) angeordnet ist, wobei an dem zweiten Ende des Betätigungsabschnitts (320) ein Befestigungsabschnitt zum Befestigen des Betätigungsabschnitts (320) an einer betätigenden Einrichtung angeordnet ist; und
Koppeln (520) des Mitnehmerabschnitts (310) zum Übertragen einer auf den Betätigungsabschnitt (320) ausübbaren Betätigungskraft auf das Absperrelement mechanisch mit dem Ventilkörper (405).

3. Verwendung eines einstückig ausgeformten Betätigungshebels (300) mit einem Betätigungsabschnitt (320), der ein zweifach gekrümmtes Längsschnittprofil in Gestalt eines angedeuteten S-förmigen Längsschnittprofils aufweist, und einem Mitnehmerabschnitt (310) zum Übertragen einer auf den Betätigungsabschnitt (320) ausübbaren Betätigungskraft auf ein Absperrelement eines Ventilkörpers (405) eines Luftfederungsventils (400) für ein Fahrzeug, wobei der Betätigungshebel (300) aus einem Kunststoffmaterial ausgeformt ist, wobei der Betätigungshebel (300) einen in dem Betätigungsabschnitt (320) ausgeformten Verstärkungsabschnitt (325) zum Verstärken einer mechanischen Steifigkeit des Betätigungshebels (300) aufweist, wobei der Mitnehmerabschnitt (310) ein rundes Querschnittsprofil aufweist und als ein zylindrischer Teilabschnitt des Betätigungshebels (300) ausgeformt ist, wobei der Betätigungsabschnitt (320) des Betätigungshebels (300) ein rechteckiges Querschnittsprofil aufweist, wobei der Betätigungsabschnitt (320) ein erstes Ende und ein zweites Ende aufweist, wobei an dem ersten Ende des Betätigungsabschnitts (320) ein Übergangsbereich zwischen dem Betätigungsabschnitt (320) und dem Mitnehmerabschnitt (310) angeordnet ist, wobei an dem zweiten Ende des Betätigungsabschnitts (320) ein Befestigungsabschnitt zum Befestigen des Betätigungsabschnitts (320) an einer betätigenden Einrichtung angeordnet ist.

## Claims

1. Air-spring valve (400) for a vehicle, such that the air-spring valve (400) comprises a valve body (405) with fluid ducts and a blocking element, wherein the air-spring valve (400) also comprises an integrally formed actuating lever (300) having an actuating section (320) and an entraining section (310), such that the entraining section (310) can be or is mechanically coupled to the valve body (405) in order to transfer an actuating force on the blocking element that can be exerted on the actuating section (320), wherein the actuating section (320) has a longitudinal section profile which is bent twice to form a shape similar to an S-shaped longitudinal profile, wherein the actuating section (320) of the actuating lever (300) has a rectangular cross-section profile, wherein the actuating section (320) has a first end and a second end, such that at the second end of the actuating section (320) there is arranged a fastening section for attaching the actuating section (320) to an actuating device, **characterised in that** the actuating lever (300) is made from a plastic material, and in the actuating section (320) of the actuating lever (300) there is formed a reinforcing section (325) to reinforce the mechanical rigidity of the actuating lever (300), whereas the entraining section (310) has a round cross-section profile and is in the form of a cylindrical portion of the actuating lever (300), and at the first end of the actuating section (320) there is a transition zone between the actuating section (320) and the entraining section (310).

2. Method (500) for assembling an air-spring valve (400) for a vehicle, the said method having the following steps:
preparation (510) of a valve body (405) with fluid ducts and a blocking element, and preparation of an integrally formed actuating lever (300) having an actuating section (320) and an entraining section (310), wherein the actuating section (320) has a longitudinal section profile which is bent twice to form a shape similar to an S-shaped longitudinal profile, wherein the actuating lever (300) is made from a plastic material, and in the actuating section (320) of the actuating lever (300) there is formed a reinforcing section (325) to reinforce the mechanical rigidity of the actuating lever (300), wherein the entraining section (310) has a round cross-section profile and is in the form of a cylindrical portion of the actuating lever (300), wherein the actuating section (320) of the actuating lever (300) has a rectangular cross-section profile, wherein the actuating section (320) has a first end and a second end, such that at the first end of the actuating section (320) there is a transition zone between the actuating section (320) and the entraining section (310), and at the second end of the actuating section (320) there is arranged a fastening section for attaching the actuating section (320) to an actuating device, and
the entraining section (310) is mechanically coupled (520) to the valve body (405) for the transfer to the blocking element of an actuating force that can be exerted on the actuating section (320).

3. Use of an integrally formed actuating lever (300) having an actuating section (320) with a longitudinal section profile which is bent twice to form a shape similar to an S-shaped longitudinal profile, and an entraining section (310) for the transfer, to a blocking element of a valve body (405) of an air-spring valve (400) of a vehicle, of an actuating force that can be exerted on the actuating section (320), wherein the actuating lever (300) is made from a plastic material, wherein, in the actuating section (320) of the actuating lever (300), there is formed a reinforcing section (325) to reinforce the mechanical rigidity of the actuating lever (300), wherein the entraining section (310) has a round cross-section profile and is in the form of a cylindrical portion of the actuating lever (300), wherein the actuating section (320) of the actuating lever (300) has a rectangular cross-section profile, wherein the actuating section (320) has a first end and a second end, such that at the first end of the actuating section (320) there is a transition zone between the actuating section (320) and the entraining section (310), and at the second end of the actuating section (320) there is arranged a fastening section for attaching the actuating section (320) to an actuating device.

## Revendications

1. Soupape (400) de suspension pneumatique pour un véhicule, dans laquelle la soupape (400) de suspension pneumatique a un corps (405) de soupape ayant des canaux pour du fluide et un élément d'obturation, la soupape (400) de suspension pneumatique ayant, en outre, un levier (300) d'actionnement d'une seule pièce ayant une partie (320) d'actionnement et une partie (310) d'entraîneur, la partie (310) d'entraîneur étant couplée ou pouvant l'être mécaniquement au corps (405) de soupape pour transmettre à l'élément d'obturation une force d'actionnement pouvant être appliquée par la partie (320) d'actionnement, la partie (320) d'actionnement ayant un profil, en coupe longitudinale, incurvé deux fois, sous la forme d'un profil, en coupe longitudinale, en forme de S prononcé, la partie (320) d'actionnement du levier (300) d'actionnement ayant un profil de section transversale rectangulaire, la partie (320) d'actionnement ayant une première extrémité et une seconde extrémité, dans laquelle, à la seconde extrémité de la partie (320) d'actionnement, est disposée une partie de fixation pour fixer la partie (320) d'actionnement à un dispositif actionnant, **caractérisé en ce que** le levier (300) d'actionnement est en une matière plastique, le levier (300) d'actionnement ayant, pour renforcer une rigidité mécanique du levier (300) d'actionnement, une partie (325) de renfort, formée dans la partie (320) d'actionnement, la partie (310) d'entraîneur ayant un profil de section transversale circulaire et étant constituée sous la forme d'une sous-partie cylindrique du levier (300) d'actionnement, une région de transition étant disposée entre la partie (320) d'actionnement et la partie (310) d'entraîneur à la première extrémité de la partie (320) d'actionnement.

2. Procédé (500) d'assemblage d'une soupape (400) de suspension pneumatique pour un véhicule, le procédé (500) ayant les stades suivants :
on se procure (510) un corps (405) de soupape ayant des canaux pour du fluide et un élément d'obturation et on se procure (510) un levier (300) d'actionnement d'une seule pièce ayant une partie (320) d'actionnement et une partie (310) d'entraîneur, la partie (320) d'actionnement ayant un profil, en coupe longitudinale, incurvé deux fois, sous la forme d'un profil, en coupe longitudinale, en forme de S prononcé, le levier (300) d'actionnement étant en une matière plastique, le levier (300) d'actionnement ayant une partie (325) de renfort formée dans la partie (320) d'actionnement pour renforcer une rigidité mécanique du levier (300) d'actionnement, la partie (310) d'entraîneur ayant un profil de section transversale circulaire et étant sous la forme d'une sous-partie cylindrique du levier (300) d'actionnement, la partie (320) d'actionnement du levier (300) d'actionnement ayant un profil de section transversale rectangulaire, la partie (320) d'actionnement ayant une première extrémité et une seconde extrémité, une région de transition, entre la partie (320) d'actionnement et la partie (310) d'entraîneur, étant disposée à la première extrémité de la partie (320) d'actionnement, une partie de fixation étant disposée à la seconde extrémité de la partie (320) d'actionnement pour fixer la partie (320) d'actionnement à un dispositif actionnant, et
on accouple (520) la partie (310) d'entraîneur mécaniquement au corps (405) de la soupape pour transmettre à l'élément d'obturation une force d'actionnement pouvant être appliquée à la partie (320) d'actionnement.

3. Utilisation d'un levier (300) d'actionnement d'une seule pièce, ayant une partie (320) d'actionnement, qui a un profil, en coupe longitudinale, incurvé deux fois, sous la forme d'un profil, en coupe longitudinale, en forme de S prononcé et une partie (310) d'entraîneur pour transmettre une force d'actionnement pouvant être appliquée à la partie (320) d'actionnement à un élément d'obturation d'un corps (405) d'une soupape (400) de suspension pneumatique pour un véhicule, le levier (300) d'actionnement étant en une matière plastique, le levier (300) d'actionnement ayant, pour renforcer une rigidité mécanique du levier (300) d'actionnement, une partie (325) de renfort formée dans la partie (320) d'actionnement, la partie (310) d'entraîneur ayant un profil de section transversale circulaire et étant sous la forme d'une sous-partie cylindrique du levier (300) d'actionnement, la partie (320) d'actionnement du levier (300) d'actionnement ayant un profil de section transversale rectangulaire, la partie (320) d'actionnement ayant une première extrémité et une second extrémité, une région de transition entre la partie (320) d'actionnement et la partie (310) d'entraîneur étant prévue à la première extrémité de la partie (320) d'actionnement, un dispositif actionnant étant disposé à la second extrémité de la partie (320) d'actionnement pour fixer la partie (320) d'actionnement à un dispositif actionnant.
